Europäisches Patentamt

European Patent Office

Office européen des brevets

(19)

(11) **EP 1 192 033 B1**

(12) **EUROPÄISCHE PATENTSCHRIFT**

(45) Veröffentlichungstag und Bekanntmachung des Hinweises auf die Patenterteilung:
**30.07.2003 Patentblatt 2003/31**

(21) Anmeldenummer: **00943856.5**

(22) Anmeldetag: **21.06.2000**

(51) Int Cl.[7]: **B29C 45/14**

(86) Internationale Anmeldenummer:
**PCT/EP00/05755**

(87) Internationale Veröffentlichungsnummer:
**WO 01/000382 (04.01.2001 Gazette 2001/01)**

(54) **HINTERSPRITZTE KUNSTSTOFFFORMTEILE**

REAR INJECTION MOULDED PLASTIC PARTS

PIECES MOULEES EN PLASTIQUE POURVUES SUR LEUR PARTIE ARRIERE D'UN REVETEMENT MOULE PAR INJECTION

(84) Benannte Vertragsstaaten:
**AT BE CH CY DE DK ES FI FR GB GR IE IT LI LU MC NL PT SE**

(30) Priorität: **23.06.1999 DE 19928774**

(43) Veröffentlichungstag der Anmeldung:
**03.04.2002 Patentblatt 2002/14**

(73) Patentinhaber: **BASF AKTIENGESELLSCHAFT 67056 Ludwigshafen (DE)**

(72) Erfinder:
• **GREFENSTEIN, Achim 67122 Altrip (DE)**

• **KNOLL, Manfred 67591 Wachenheim (DE)**

(74) Vertreter: **Isenbruck, Günter, Dr. Isenbruck, Bösl, Hörschler, Wichmann, Huhn, Patentanwälte Theodor-Heuss-Anlage 12 68165 Mannheim (DE)**

(56) Entgegenhaltungen:
**DE-A- 19 651 350**

Bemerkungen:
Die Akte enthält technische Angaben, die nach dem Eingang der Anmeldung eingereicht wurden und die nicht in dieser Patentschrift enthalten sind.

EP 1 192 033 B1

**Beschreibung**

Die Erfindung betrifft hinterspritzte oder hintergossene Kunststofformteile, Verfahren zu ihrer Herstellung und ihre Verwendung als oder in Kraftfahrzeugkarosserieaußenteile(n).

Beim Einsatz von Kunststoffen im Außenbereich, bei dem sie der Witterung und insbesondere UV-Strahlung ausgesetzt sind, werden hohe Anforderungen an die UVund Witterungsbeständigkeit gestellt. Insbesondere beim Einsatz in Karosserie-Außenteilen im Fahrzeugbereich werden zudem hohe Anforderungen an die weiteren mechanischen Eigenschaften, wie die Tieftemperaturzähigkeit, wie auch an die optische Qualität gestellt. Die derzeit eingesetzten Verfahren bzw. Werkstoffe erfüllen diese Bedingungen nicht immer.

Karosserieteile aus Kunststoffen werden beispielsweise decklackiert oder in Masse eingefärbt und klarlakkiert. Die Decklackierung erfordert dabei eine hohe Wärmeformbeständigkeit, die nur wenige Kunststoffe aufweisen. Eine Masseeinfärbung insbesondere mit Effektpigmenten ist kostenaufwendig und vermindert vielfach die mechanischen Eigenschaften des Substrates.

Anstelle einer Sprühlackierung können andere Beschichtungsverfahren, beispielsweise die Hinterspritztechnologie verwendet werden. Dazu werden Lackfolien durch Walzenbeschichtungs- oder Tiefdruckverfahren hergestellt und mit Trägermaterialien hinterspritzt oder hinterpreßt.

In J. H. Schut, Plastics World, Juli 1996, Seiten 48 bis 52 wird die Anwendung derartiger Lackfolien bei der Herstellung von Automobilteilen beschrieben. Polyvinylidenfluorid-Filme und Polyvinylfluorid-Filme werden beschrieben, die in Verbindung mit ABS als Substrate eingesetzt werden. Auch Polyvinylidenfluorid/Acrylat-Filme werden erwähnt. Auch thermoplastische Olefine können als Substrate eingesetzt werden. Als Herstellungsverfahren werden das Thermoformen, Thermoformen in Verbindung mit Spritzgießen und das Spritzgießen allein aufgeführt.

Bislang finden alle bekannten Hinterspritzfolien nur für Effekteinfärbungen und mehrfarbige Dekore Verwendung, da die Folien sehr kostspielig sind.

Außerdem sind coextrudierte Platten aus Polymethylmethacrylat (PMMA) und ABS als Karosseriewerkstoff bekannt. Beispielsweise sind von H. Kappacher in Kunststoffe 86 (1996), S. 388 bis 392 coextrudierte PMMA/ABS-Verbundplatten beschrieben. Die Karosserieteile werden dabei durch Coextrusion über eine Breitschlitzdüse zu Platten und anschließendes Thermoformen der Platten hergestellt. In manchen Anwendungen ist jedoch die Wärmealterungsbeständigkeit des ABS zu gering. Um das ABS oder ABS/PC vor dem UV-Licht zu schützen, müssen relativ dicke UV-absorbierende PMMA-Deckschichten eingesetzt werden. Zudem kann die Zähigkeit, die durch die spröde PMMA-Deckschicht vermindert ist. zu gering sein. Zudem nimmt der Oberflächenglanz bei Verstreckgraden ab 1:2 deutlich ab.

Ein Hinterspritzverfahren zur Herstellung eingefärbter Kunststofformteile wird unter der Bezeichnung "Paintless Film Moulding", "PFM-System®" angeboten. Es handelt sich um eine Kooperation der BASF AG, Engel GmbH, Röhm GmbH und Senoplast GmbH & Co.KG. Eine Übersicht über coextrudierte Filme findet sich in Kunststoffe 89 (1999, 3, Seiten 96 bis 101).

Verbundschichtfolien sind beispielsweise in DE-A-196 51 350 beschrieben.
Beim Einsatz von thermoplastischen Kunststoffen als großflächige Karosserieaußenteile (Kotflügel, Türaußenverkleidungen etc.) wird eine duktiles. d.h. splitterfreies Bruchverhalten (auch bei tiefen Temperaturen) bei einem gleichzeitig möglichst geringen thermischen Längenausdehnungskoeffizienten (CTE) gefordert. Zudem sollten die Bauteile bis zu einer Aufprallgeschwindigkeit von 5 bis 8 km/h schadensfrei bleiben (sog. Bagatellschadensgrenze). Derzeit werden in diesem Anwendungsgebiet vereinzelt Werkstoffe wie unverstärkte PBT/PC- oder PPE/PA-Blends eingesetzt. Der gegenüber Stahl ($12*10^{-6}$1/K) und Aluminium ($23*10^{-6}$1/K) deutlich höhere thermische Längenausdehungskoeffizient "CTE" (über $80*10^{-6}$1/K) dieser Materialien muß durch geeignete konstruktive Maßnahmen ausgeglichen werden (Veröffentlichung Hopfenspirger et. al. in Kunststoffe 88 (1998) 10, Seiten 1878 bis 1886). Darüber hinaus wurden ASA/PC-Blends entwickelt, welche als amorphe Werkstoffe einen etwas geringeren CTE als PBT/PC- oder PPE/PA-Blends aufweisen.

Unverstärkte Thermoplaste weisen somit gegenüber Stahl und Aluminium deutlich höhere Längenausdehnungskoeffizienten aus. Durch den Einsatz von mineralischen Füllstoffen in geringen Anteilen konnten minimal Werte von ca. $60*10^{-6}$1/K erreicht werden. Höhere Füllstoffgehalte führten dagegen zu einer unakzeptablen Beeinträchtigung der Kälteschlagzähigkeit des Blends.

Mit faserverstärkten Thermoplasten ließen sich zwar Werte unter $60*10^{-6}$1/K erreichen, aber aufgrund ihres spröden Bruchverhaltens konnten solche Produkte für diese Anwendung bisher keinen Einsatz finden. So zeigt ein sog. "Kopfaufpralltest" an einer Heckklappe aus einem mit 15 % Glasfaser verstärkten PBT/ASA-Blend bei einer Temperatur von $-30°C$ und einer Geschwindigkeit von 32 km/h ein splitterndes Bruchverhalten, bei dem das Bauteil in mehrere große Teile zerbricht. Zudem ist die Lackierfähigkeit bei hohen Fasergehalten und/oder Faserlängen eingeschränkt. Eine Class-A-Oberfläche läßt sich nur nach Vorbehandlung erreichen.

Aufgabe der vorliegenden Erfindung ist die Bereitstellung von hinterspritzten oder hintergossenen Kunststofformteilen, die nach Hinterspritzen oder Hintergießen Class-A-"lackierte" Bauteile ergeben, die ein vorteilhaftes Bruchverhalten zeigen.

Die Aufgabe wird erfindungsgemäß gelöst durch ein hinterspritztes oder hintergossenes Kunststofformteil aus einer Kunststoff-Hinterspritzfolie, die mit einem faserverstärkten Kunststoffmaterial mit einem Fasergehalt von 5 bis 30 Gew.-% hinterspritzt oder hintergossen ist, wobei das Hinterspritzmaterial eine Dicke von 1,5 bis 4,5 mm aufweist, und wobei auch bis zu 50 Gew.-% der Fasern durch mineralische Füllstoffe ersetzt sein können, dadurch gekennzeichnet, daß die Länge der Fasern im faserverstärkten Kunststoffmaterial im Kunststofformteil zumindest teilweise > 1 mm beträgt.

Es wurde erfindungsgemäß gefunden, daß die Oberfläche der erhaltenen hinterspritzten oder hintergossenen Kunststofformteile nicht durch die Verwendung von faserverstärkten Produkten beeinträchtigt wird. Zudem wurde festgestellt, daß das Bruchverhalten der faserverstärkten Werkstoffe durch die Hinterspritzfolie stark positiv beeinflußt wird.

Insbesondere die Kombination von glasfaserverstärkten Thermoplasten als Hinterspritzmaterial mit einer Folie aus unverstärkten Thermoplasten ermöglicht erstmals die Herstellung von Class-A-Bauteilen, die ohne Lackierung hergestellt werden.

Die erfindungsgemäßen Kunststofformteile weisen eine gegenüber den bekannten Formkörpern verbesserte Durchstoßarbeit und/oder Kältezähigkeit, bei gleichzeitig sehr geringer thermischer Längenausdehnung auf. Sie sind insbesondere für den Außeneinsatz geeignet, wo sie durch die Folie vor UV-Strahlung und Witterungseinflüssen geschützt sind. Insbesondere kommt die Verwendung im Fahrzeugbereich in Betracht.

Die einzelnen Schichten bzw. Komponenten der hinterspritzten Formteile oder der Hinterspritzfolien werden nachstehend beschrieben.

**Schicht (1')**

Schicht (1') ist aus den nachstehenden Komponenten A und B und gegebenenfalls C, die insgesamt 100 Gew.-% ergeben, aufgebaut.

Komponente A ist ein Pfropfcopolymerisat aus

a1    1 bis 99 Gew.-%, vorzugsweise 55 bis 80 Gew.-%, insbesondere 55 bis 65 Gew.-%, einer teilchenförmigen Pfropfgrundlage A1 mit einer Glasübergangstemperatur unterhalb von 0°C,

a2    1 bis 99 Gew.-%, vorzugsweise 20 bis 45 Gew.-%, insbesondere 35 bis 45 Gew.-%. einer Pfropfauflage A2 aus den Monomeren, bezogen auf A2,

a21    40 bis 100 Gew.-%, vorzugsweise 65 bis 85 Gew.-%, Einheiten des Styrols, eines substituierten Styrols oder eines (Meth)acrylsäureesters oder deren Gemische, insbesondere des Styrols und/oder $\alpha$-Methylstyrols als Komponente A21 und

a22    bis 60 Gew.-%, vorzugsweise 15 bis 35 Gew.-%, Einheiten des Acrylnitrils oder Methacrylnitrils, insbesondere des Acrylnitrils als Komponente A22.

Die Pfropfauflage A2 besteht dabei aus mindestens einer Pfropfhülle, wobei das Pfropfcopolymerisat A insgesamt eine mittlere Teilchengröße von 50 bis 1000 nm aufweist.

Komponente A1 besteht dabei aus den Monomeren

a11    80 bis 99,99 Gew.-%, vorzugsweise 95 bis 99,9 Gew.-%, mindestens eines $C_{1-8}$-Alkylesters der Acrylsäure, vorzugsweise n-Butylacrylat und/oder Ethylhexylacrylat als Komponente A11,

a12    0,01 bis 20 Gew.-%, vorzugsweise 0,1 bis 5,0 Gew.-%, mindestens eines polyfunktionellen vernetzenden Monomeren, vorzugsweise Diallylphthalat und/oder DCPA als Komponente A12.

Gemäß einer Ausführungsform der Erfindung beträgt die mittlere Teilchengröße der Komponente A 50 bis 800 nm, vorzugsweise 50 bis 600 nm.

Gemäß einer weiteren erfindungsgemäßen Ausführungsform ist die Teilchengrößenverteilung der Komponente A bimodal, wobei 60 bis 90 Gew.-% eine mittlere Teilchengröße von 50 bis 200 nm und 10 bis 40 Gew.-% eine mittlere Teilchengröße von 50 bis 400 nm aufweisen, bezogen auf das Gesamtgewicht der Komponente A.

Als mittlere Teilchengröße beziehungsweise Teilchengrößenverteilung werden die aus der integralen Massenverteilung bestimmten Größen angegeben. Bei den erfindungsgemäßen mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 - 796, bestimmt wurden. Die Ultrazentrifugenmessung liefert die integrale Massenverteilung des Teilchendurchmessers einer Probe.

Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, dem dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$ und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 beziehungsweise 90 Gew.-% der Teilchen bezogen sind. Der Quotient

$$\frac{d_{90}\text{-}d_{10}}{d_{50}} = Q$$

stellt ein Maß für die Verteilungsbreite der Teilchengröße dar. Als Komponente A erfindungsgemäß verwendbare Emulsionspolymerisate A weisen vorzugsweise Q-Werte kleiner als 0,5, insbesondere kleiner als 0,35 auf.

Bei den Acrylatkautschuken A1 handelt es sich vorzugsweise um Alkylacrylat-Kautschuke aus einem oder mehreren $C_{1-8}$-Alkylacrylaten, vorzugsweise $C_{4-8}$-Alkylacrylaten, wobei bevorzugt mindestens teilweise Butyl-, Hexyl-, Octyl- oder 2-Ethylhexylacrylat, insbesondere n-Butyl- und 2-Ethylhexylacrylat, verwendet wird. Diese Alkylacrylat-Kautschuke können bis zu 30 Gew.-% harte Polymere bildende Monomere, wie Vinylacetat, (Meth)acrylnitril, Styrol, substituiertes Styrol, Methylmethacrylat, Vinylether. einpolymerisiert enthalten.

Die Acrylatkautschuke enthalten weiterhin 0,01 bis 20 Gew.-%, vorzugsweise 0,1 bis 5 Gew.-%, an vernetzend wirkenden, polyfunktionellen Monomeren (Vernetzungsmonomere). Beispiele hierfür sind Monomere, die 2 oder mehr zur Copolymerisation befähigte Doppelbindungen enthalten, die vorzugsweise nicht in den 1,3-Stellungen konjugiert sind.

Geeignete Vernetzungsmonomere sind beispielsweise Divinylbenzol, Diallylmaleat, Diallylfumarat, Diallylphthalat, Diethylphthalat, Triallylcyanurat, Triallylisocyanurat, Tricyclodecenylacrylat, Dihydrodicyclopentadienylacrylat, Triallylphosphat, Allylacrylat, Allylmethacrylat. Als besonders günstiges Vernetzungsmonomer hat sich Dicyclopentadienylacrylat (DCPA) erwiesen (vgl. DE-C 12 60 135).

Bei der Komponente A handelt es sich um ein Pfropfcopolymerisat. Die Pfropfcopolymerisate A haben dabei eine mittlere Teilchengröße $d_{50}$ von 50 bis 1000 nm, bevorzugt von 50 bis 800 nm und besonders bevorzugt von 50 bis 600 nm. Diese Teilchengrößen können erzielt werden, wenn man als Pfropfgrundlage A1 dieser Komponente A Teilchengrößen von 50 bis 350 nm, bevorzugt von 50 bis 300 nm und besonders bevorzugt von 50 bis 250 nm verwendet.

Das Pfropfcopolymerisat A ist im allgemeinen ein- oder mehrstufig, das heißt ein aus einem Kern und einer oder mehreren Hüllen aufgebautes Polymerisat. Das Polymerisat besteht aus einer Grundstufe (Pfropfkern) A1 und einer oder - bevorzugt - mehreren darauf gepfropften Stufen A2 (Pfropfauflage), den sogenannten Pfropfstufen oder Pfropfhüllen.

Durch einfache Pfropfung oder mehrfache schrittweise Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (s. z.B. EP-A-0 230 282, DE-A 36 01 419, EP-A-0 269 861).

In einer bevorzugten Ausführungsform besteht Komponente A aus einem mehrstufig aufgebauten Pfropfcopolymerisat, wobei die Pfropfstufen im allgemeinen aus harzbildenden Monomeren hergestellt sind und eine Glastemperatur $T_g$ oberhalb von 30°C, vorzugsweise oberhalb von 50°C haben. Der mehrstufige Aufbau dient unter anderem dazu, eine (Teil-)Verträglichkeit der Kautschukteilchen A mit dem Thermoplasten B zu erzielen.

Pfropfcopolymerisate A werden hergestellt beispielsweise durch Pfropfung von mindestens einem der im folgenden aufgeführten Monomeren A2 auf mindestens eine der vorstehend aufgeführten Pfropfgrundlagen bzw. Pfropfkernmaterialien A1.

Gemäß einer Ausführungsform der Erfindung ist die Pfropfgrundlage A1 aus 15 bis 99 Gew.-% Acrylatkautschuk, 0,1 bis 5 Gew.-% Vernetzer und 0 bis 49,9 Gew.-% eines der angegebenen weiteren Monomere oder Kautschuke zusammengesetzt.

Geeignete Monomere zur Bildung der Pfropfauflage A2 sind Styrol, α-Methylstyrol, (Meth)acrylsäureester, Acrylnitril und Methacrylnitril, insbesondere Acrylnitril.

Gemäß einer Ausführungsform der Erfindung dienen als Pfropfgrundlage A1 vernetzte Acrylsäureester-Polymerisate mit einer Glasübergangstemperatur unter 0°C. Die vernetzten Acrylsäureester-Polymerisate sollen vorzugsweise eine Glasübergangstemperatur unter -20°C, insbesondere unter -30°C, besitzen.

In einer bevorzugten Ausführungsform besteht die Pfropfauflage A2 aus mindestens einer Pfropfhülle, und die äußerste Pfropfhülle davon hat eine Glasübergangstemperatur von mehr als 30°C, wobei ein aus den Monomeren der Pfropfauflage A2 gebildetes Polymer eine Glasübergangstemperatur von mehr als 80°C aufweisen würde.

Geeignete Herstellverfahren für Pfropfcopolymerisate A sind die Emulsions-, Lösungs-, Masse- oder Suspensionspolymerisation. Bevorzugt werden die Pfropfcopolymerisate A durch radikalische Emulsionspolymerisation hergestellt in Gegenwart von Latices der Komponente A1 bei Temperaturen von 20°C bis 90°C unter Verwendung wasserlöslicher oder öllöslicher Initiatoren wie Peroxodisulfat oder Benzylperoxid, oder mit Hilfe von Redoxinitiatoren. Redoxinitiatoren eignen sich auch zur Polymerisation unterhalb von 20°C.

Geeignete Emulsionspolymerisationsverfahren sind beschrieben in den DE-A 28 26 925,31 49 358 und in der DE-C 12 60 135.

Der Aufbau der Pfropfhüllen erfolgt vorzugsweise im Emulsionspolymerisationsverfahren, wie es beschrieben ist in DE-A 32 27 555, 31 49 357, 31 49 358, 34 14 118. Das definierte Einstellen der erfindungsgemäßen Teilchengrößen von 50 bis 1000 nm erfolgt bevorzugt nach den Verfahren, die beschrieben sind in der DE-C 12 60 135 und DE-A 28 26 925, beziehungsweise Applied Polymer Science, Band 9 (1965), Seite 2929. Das Verwenden von Polymerisaten mit unterschiedlichen Teilchengrößen ist beispielsweise bekannt aus DE-A 28 26 925 und US-A 5 196 480.

Gemäß dem in der DE-C 12 60 135 beschriebenen Verfahren wird zunächst die Pfropfgrundlage A1 hergestellt, indem der oder die gemäß einer Ausführungsform der Erfindung verwendeten Acrylsäureester und das polyfunktionelle, die Vernetzung bewirkende Monomere, gegebenenfalls zusammen mit den weiteren Comonomeren, in wäßriger Emulsion in an sich bekannter Weise bei Temperaturen zwischen 20 und 100°C, vorzugsweise zwischen 50 und 80°C, polymerisiert werden. Es können die üblichen Emulgatoren, wie beispielsweise Alkalisalze von Alkyloder Alkylarylsulfonsäuren. Alkylsulfate, Fettalkoholsulfonate. Salze höherer Fettsäuren mit 10 bis 30 Kohlenstoffatomen oder Harzseifen verwendet werden. Vorzugsweise verwendet man die Natriumsalze von Alkylsulfonaten oder Fettsäuren mit 10 bis 18 Kohlenstoffatomen. Gemäß einer Ausführungsform werden die Emulgatoren in Mengen von 0,5 bis 5 Gew.-%, insbesondere von 1 bis 2 Gew.-%, bezogen auf die bei der Herstellung der Pfropfgrundlage A1 eingesetzten Monomeren, eingesetzt. Im allgemeinen wird bei einem Gewichtsverhältnis von Wasser zu Monomeren von 2 : 1 bis 0,7 : 1 gearbeitet. Als Polymerisationsinitiatoren dienen insbesondere die gebräuchlichen Persulfate, wie beispielsweise Kaliumpersulfat. Es können jedoch auch Redoxsysteme zum Einsatz gelangen. Die Initiatoren werden im allgemeinen in Mengen von 0,1 bis 1 Gew.-%, bezogen auf die bei der Herstellung der Pfropfgrundlage A1 eingesetzten Monomeren, eingesetzt. Als weitere Polymerisationshilfsstoffe können die üblichen Puffersubstanzen, durch welche pH-Werte von vorzugsweise 6 bis 9 eingestellt werden, wie Natriumbicarbonat und Natriumpyrophosphat, sowie 0 bis 3 Gew.-% eines Molekulargewichtsreglers, wie Mercaptane, Terpinole oder dimeres $\alpha$-Methylstyrol, bei der Polymerisation verwendet werden.

Die genauen Polymerisationsbedingungen, insbesondere Art, Dosierung und Menge des Emulgators, werden innerhalb der oben angegebenen Bereiche im einzelnen so bestimmt, daß der erhaltene Latex des vernetzten Acrylsäureesterpolymerisats einen $d_{50}$-Wert im Bereich von etwa 50 bis 1000 nm, vorzugsweise 50 bis 600 nm, besonders bevorzugt im Bereich von 80 bis 500 nm, besitzt. Die Teilchengrößenverteilung des Latex soll dabei vorzugsweise eng sein.

Zur Herstellung des Pfropfpolymerisats A wird sodann in einem nächsten Schritt in Gegenwart des so erhaltenen Latex des vernetzten Acrylsäureester-Polymerisats gemäß einer Ausführungsform der Erfindung ein Monomerengemisch aus Styrol und Acrylnitril polymerisiert, wobei das Gewichtsverhältnis von Styrol zu Acrylnitril in dem Monomerengemisch gemäß einer Ausführungsform der Erfindung im Bereich von 100 : 0 bis 40 : 60, vorzugsweise im Bereich von 65 : 35 bis 85 : 15, liegen soll. Es ist vorteilhaft, diese Pfropfcopolymerisation von Styrol und Acrylnitril auf das als Pfropfgrundlage dienende vernetzte Polyacrylsäureesterpolymerisat wieder in wäßriger Emulsion unter den üblichen. vorstehend beschriebenen Bedingungen durchzuführen. Die Pfropfcopolymerisation kann zweckmäßig im gleichen System erfolgen wie die Emulsionspolymerisation zur Herstellung der Pfropfgrundlage A1, wobei, falls notwendig, weiterer Emulgator und Initiator zugegeben werden kann. Das gemäß einer Ausführungsform der Erfindung aufzupfropfende Monomerengemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfcopolymerisation des Gemisches von Styrol und Acrylnitril in Gegenwart des vernetzenden Acrylsäureesterpolymerisats wird so geführt, daß ein Pfropfgrad von 1 bis 99 Gew.-%, vorzugsweise 20 bis 45 Gew.-%, insbesondere 35 bis 45 Gew.-%, bezogen auf das Gesamtgewicht der Komponente A, im Pfropfcopolymerisat A resultiert. Da die Pfropfausbeute bei der Pfropfcopolymerisation nicht 100% beträgt, muß eine etwas größere Menge des Monomerengemisches aus Styrol und Acrylnitril bei der Pfropfcopolymerisation eingesetzt werden, als es dem gewünschten Pfropfgrad entspricht. Die Steuerung der Pfropfausbeute bei der Pfropfcopolymerisation und somit des Pfropfgrades des fertigen Pfropfcopolymerisats A ist dem Fachmann geläufig und kann beispielsweise unter anderem durch die Dosiergeschwindigkeit der Monomeren oder durch Reglerzugabe erfolgen (Chauvel, Daniel, ACS Polymer Preprints 15 (1974), Seite 329 ff.). Bei der Emulsions-Pfropfcopolymerisation entstehen im allgemeinen etwa 5 bis 15 Gew.-%, bezogen auf das Pfropfcopolymerisat, an freiem, ungepfropftem Styrol/Acrylnitril-Copolymerisat. Der Anteil des Pfropfcopolymerisats A in dem bei der Pfropfcopolymerisation erhaltenen Polymerisationsprodukt wird nach der oben angegebenen Methode ermittelt.

Bei der Herstellung der Pfropfcopolymerisate A nach dem Emulsionsverfahren sind neben den gegebenen verfahrenstechnischen Vorteilen auch reproduzierbare Teilchengrößenveränderungen möglich, beispielsweise durch zumindest teilweise Agglomeration der Teilchen zu größeren Teilchen. Dies bedeutet, daß in den Pfropfcopolymerisaten A auch Polymere mit unterschiedlichen Teilchengrößen vorliegen können.

Vor allem die Komponente A aus Pfropfgrundlage und Pfropfhülle(n) kann für den jeweiligen Verwendungszweck optimal angepaßt werden, insbesondere in bezug auf die Teilchengröße.

Die Pfropfcopolymerisate A enthalten im allgemeinen 1 bis 99 Gew.-%, bevorzugt 55 bis 80 und besonders bevorzugt 55 bis 65 Gew.-% Pfropfgrundlage A1 und 1 bis 99 Gew.-%, bevorzugt 20 bis 45, besonders bevorzugt 35 bis 45 Gew.-% der Pfropfauflage A2, jeweils bezogen auf das gesamte Pfropfcopolymerisat.

**KOMPONENTE B**

Komponente B ist ein Copolymerisat aus

b1 40 bis 100 Gew.-%, vorzugsweise 60 bis 85 Gew.-%, Einheiten des Styrols, eines substituierten Styrols oder eines (Meth)acrylsäureesters oder deren Gemische, insbesondere des Styrols und/oder $\alpha$-Methylstyrols als Komponente B1,

b2 bis 60 Gew.-%, vorzugsweise 15 bis 40 Gew.-%, Einheiten des Acrylnitrils oder Methacrylnitrils, insbesondere des Acrylnitrils als Komponente B2.

Gemäß einer bevorzugten Ausführungsform der Erfindung beträgt die Viskositätszahl der Komponente B 50 bis 90, vorzugsweise 60 bis 80.

Vorzugsweise ist Komponente B ein amorphes Polymerisat, wie es vorstehend als Pfropfauflage A2 beschrieben ist. Gemäß einer Ausführungsform der Erfindung wird als Komponente B ein Copolymerisat von Styrol und/oder $\alpha$-Methylstyrol mit Acrylnitril verwendet. Der Acrylnitrilgehalt in diesen Copolymerisaten der Komponente B beträgt dabei 0 bis 60 Gew.-%, vorzugsweise 15 bis 40 Gew.-%, bezogen auf das Gesamtgewicht der Komponente B. Zur Komponente B zählen auch die bei der Pfropfcopolymerisation zur Herstellung der Komponente A entstehenden freien, nicht gepfropften Styrol/Acrylnitril-Copolymerisate. Je nach den bei der Pfropfcopolymerisation für die Herstellung des Pfropfcopolymerisats A gewählten Bedingungen kann es möglich sein, daß bei der Pfropfcopolymerisation schon ein hinreichender Anteil an Komponente B gebildet worden ist. Im allgemeinen wird es jedoch erforderlich sein, die bei der Pfropfcopolymerisation erhaltenen Produkte mit zusätzlicher, separat hergestellter Komponente B abzumischen.

Bei dieser zusätzlichen, separat hergestellten Komponente B kann es sich vorzugsweise um ein Styrol/Acrylnitril-Copolymerisat, ein $\alpha$-Methylstyrol/Acrylnitril-Copolymerisat oder ein $\alpha$-Methylstyrol/Styrol/Acrylnitril-Terpolymerisat handeln. Diese Copolymerisate können einzeln oder auch als Gemisch für die Komponente B eingesetzt werden, so daß es sich bei der zusätzlichen, separat hergestellten Komponente B beispielsweise um ein Gemisch aus einem Styrol/-Acrylnitril-Copolymerisat und einem $\alpha$-Methylstyrol/Acrylnitril-Copolymerisat handeln kann. In dem Fall, in dem die Komponente B aus einem Gemisch aus einem Styrol/Acrylnitril-Copolymerisat und einem $\alpha$-Methylstyrol/Acrylnitril-Copolymerisat besteht, sollte vorzugsweise der Acrylnitrilgehalt der beiden Copolymerisate um nicht mehr als 10 Gew.-%, vorzugsweise nicht mehr als 5 Gew.-%, bezogen auf das Gesamtgewicht des Copolymerisats, voneinander abweichen.

Die Komponente B kann jedoch auch nur aus einem einzigen Styrol/Acrylnitril-Copolymerisat bestehen, wenn bei den Pfropfcopolymerisationen zur Herstellung der Komponente A als auch bei der Herstellung der zusätzlichen, separat hergestellten Komponente B von dem gleichen Monomergemisch aus Styrol und Acrylnitril ausgegangen wird.

Die zusätzliche, separat hergestellte Komponente B kann nach den herkömmlichen Verfahren erhalten werden. So kann gemäß einer Ausführungsform der Erfindung die Copolymerisation des Styrols und/oder $\alpha$-Methylstyrols mit dem Acrylnitril in Masse, Lösung, Suspension oder wäßriger Emulsion durchgeführt werden. Die Komponente B hat vorzugsweise eine Viskositätszahl von 40 bis 100, bevorzugt 50 bis 90, insbesondere 60 bis 80. Die Bestimmung des Viskositätszahl erfolgt dabei nach DIN 53 726, dabei werden 0,5 g Material in 100 ml Dimethylformamid gelöst.

Das Mischen der Komponenten A und B und gegebenenfalls C, kann nach jeder beliebigen Weise nach allen bekannten Methoden erfolgen. Wenn die Komponenten A und B beispielsweise durch Emulsionspolymerisation hergestellt worden sind, ist es möglich, die erhaltenen Polymerdispersionen miteinander zu vermischen, darauf die Polymerisate gemeinsam auszufällen und das Polymerisatgemisch aufzuarbeiten. Vorzugsweise erfolgt jedoch das Abmischen der Komponenten A und B durch gemeinsames Extrudieren, Kneten oder Verwalzen der Komponenten, wobei die Komponenten, sofern erforderlich, zuvor aus der bei der Polymerisation erhaltenen Lösung oder wäßrigen Dispersion isoliert worden sind. Die in wäßriger Dispersion erhaltenen Produkte der Pfropfcopolymerisation (Komponente A) können auch nur teilweise entwässert werden und als feuchte Krümel mit der Komponente B vermischt werden, wobei dann während des Vermischens die vollständige Trocknung der Pfropfcopolymerisate erfolgt.

In einer bevorzugten Ausführungsform enthält die Komponente (1) neben den Komponenten A und B zusätzliche Komponenten C, sowie ggf. weitere Zusatzstoffe, wie im folgenden beschrieben.

**KOMPONENTE C**

Geeignete Polycarbonate C sind an sich bekannt. Sie haben vorzugsweise ein Molekulargewicht (Gewichtsmittelwert $M_w$, bestimmt mittels Gelpermeationschromatographie in Tetrahydrofuran gegen Polystyrolstandards) im Bereich von 10 000 bis 60 000 g/mol. Sie sind z.B. entsprechend den Verfahren der DE-B-1 300 266 durch Grenzflächenpolykondensation oder gemäß dem Verfahren der DE-A-1 495 730 durch Umsetzung von Diphenylcarbonat mit Bisphenolen erhältlich. Bervorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfan, 4,4'-Dihydroxydiphenylether, 4,4'-Dihydroxydiphenylsulfit, 4,4'-Dihydroxydiphenylmethan, 1,1-Di-(4-hydroxyphenyl)ethan, 4,4-Dihydroxydiphenyl oder Dihydroxydiphenylcycloalkane, bevorzugt Dihydroxydiphenylcyclohexane oder Dihydroxylcyclopentane, insbesondere 1,1-Bis(4-hydroxyphenyl)-3,3,5-trimethylcyclohexan sowie Mischungen der vorgenannten Dihydroxyverbindungen.

Besonders bevorzugte Polycarbonate sind solche auf der Basis von Bisphenol A oder Bisphenol A zusammen mit bis zu 80 Mol-% der vorstehend genannten aromatischen Dihydroxyverbindungen.

Es können auch Copolycarbonate gemäß der US 3,737,409 verwendet werden; von besonderem Interesse sind dabei Copolycarbonate auf der Basis von Bisphenol A und Di-(3,5-dimethyl-dihydroxyphenyl)sulfon, die sich durch eine hohe Wärmeformbeständigkeit auszeichnen. Ferner ist es möglich, Mischungen unterschiedlicher Polycarbonate einzusetzen.

Die mittleren Molekulargewichte (Gewichtsmittelwert $M_w$, bestimmt mittels Gelpermeationschromatographie in Tetrahydrofuran gegen Polystyrolstandards) der Polycarbonate C liegen erfindungsgemäß im Bereich von 10 000 bis 64 000 g/mol. Bevorzugt liegen sie im Bereich von 15 000 bis 63 000, insbesondere im Bereich von 15 000 bis 60 000 g/mol. Dies bedeutet, daß die Polycarbonate C relative Lösungsviskositäten im Bereich von 1,1 bis 1,3, gemessen in 0,5 gew.-%iger Lösung in Dichlormethan bei 25°C, bevorzugt von 1,15 bis 1,33, haben. Vorzugsweise unterscheiden sich die relativen Lösungsviskositäten der eingesetzten Polycarbonate um nicht mehr als 0,05, insbesondere nicht mehr als 0,04.

Die Polycarbonate C können sowohl als Mahlgut als auch in granulierter Form eingesetzt werden. Sie liegen als Komponente C in Mengen von 0 bis 50 Gew.-%, bevorzugt von 10 bis 40 Gew.-%, jeweils bezogen auf die gesamte Formmasse, vor.

Der Zusatz von Polycarbonaten führt unter anderem zu höherer Thermostabilität und verbesserter Rißbeständigkeit der Platten, Folien und Formkörper.

Die erfindungsgemäß verwendete Komponente (1') kann ferner weitere Zusatzstoffe enthalten, die für Polycarbonate, SAN-Polymerisate und Pfropfcopolymerisate oder deren Mischungen typisch und gebräuchlich sind. Als solche Zusatzstoffe seien beispielsweise genannt: Farbstoffe, Pigmente, Effektfarbmittel, Antistatika, Antioxidantien, Stabilisatoren zur Verbesserung der Thermostabilität. zur Erhöhung der Lichtstabilität, zum Anheben der Hydrolysebeständigkeit und der Chemikalienbeständigkeit, Mittel gegen die Wärmezersetzung und insbesondere die Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, Iodide), die sich von Metallen der Gruppe I des Periodensystems der Elemente ableiten (wie Li, Na, K, Cu).

Geeignete Stabilisatoren sind die üblichen gehinderten Phenole, aber auch Vitamin E beziehungsweise analog aufgebaute Verbindungen. Auch HALS-Stabilisatoren (Hindered Amine Light Stabilizers), Benzophenone, Resorcine, Salicylate, Benzotriazole wie Tinuvin®P (UV-Absorber 2 - (2H-Benzotriazol-2-yl)-4-methylphenol der CIBA) und andere Verbindungen sind geeignet. Diese werden üblicherweise in Mengen bis zu 2 Gew.-% (bezogen auf das Gesamtgemisch) verwendet.

Geeignete Gleit- und Entformungsmittel sind Stearinsäuren, Stearylalkohol, Stearinsäureester bzw. allgemein höhere Fettsäuren, deren Derivate und entsprechende Fettsäuregemische mit 12 bis 30 Kohlenstoffatomen. Die Mengen dieser Zusätze liegen im Bereich von 0,05 bis 1 Gew.-%.

Auch Siliconöle, oligomeres Isobutylen oder ähnliche Stoffe kommen als Zusatzstoffe in Frage, die üblichen Mengen betragen 0,05 bis 5 Gew.-%. Pigmente, Farbstoffe, optische Aufheller, Effektfarbmittel, wie Titandioxid, Ruß, Eisenoxide, Phthalocyanine, Chinacridone, Perylene, Anthrachinone, Aluminiumflitter sind ebenfalls verwendbar.

Verarbeitungshilfsmittel und Stabilisatoren wie UV-Stabilisatoren, Schmiermittel und Antistatika werden üblicherweise in Mengen von 0,01 bis 5 Gew.-% verwendet.

Die Herstellung der Komponente (1') kann nach an sich bekannten Verfahren durch Mischen der Komponenten erfolgen. Es kann vorteilhaft sein, einzelne Komponenten vorzumischen. Auch das Mischen der Komponenten in Lösung und Entfernen der Lösungsmittel ist möglich.

Geeignete organische Lösungsmittel sind beispielsweise Chlorbenzol, Gemische aus Chlorbenzol und Methylenchlorid oder Gemische aus Chlorbenzol oder aromatischen Kohlenwasserstoffen, zum Beispiel Toluol.

Das Eindampfen der Lösungsmittelgemische kann beispielsweise in Eindampfextrudem erfolgen.

Das Mischen der zum Beispiel trockenen Komponenten kann nach allen bekannten Methoden erfolgen. Vorzugsweise geschieht jedoch das Mischen durch gemeinsames Extrudieren, Kneten oder Verwalzen der Komponenten, bevorzugt bei Temperaturen von 180 bis 400°C, wobei die Komponenten notwendigenfalls zuvor aus der bei der Polymerisation erhaltenen Lösung oder aus der wäßrigen Dispersion isoliert worden sind.

Dabei können die Komponenten gemeinsam oder getrennt/nacheinander eindosiert werden.

Die Schicht (1') kann auch aus ABS, Polycarbonat, Polybutylenterephthalat (PBT), Polyethylenterephthalat, Polyamid, Polyetherimid (PEI), Polyetherketon (PEK), Polyphenylensulfid (PPS), Polyphenylenether oder Blends aufgebaut sein. Die einzelnen Werkstoffe sind dabei bekannt, beispielsweise aus H. Domininghaus, Die Kunststoffe und ihre Eigenschaften, VDI-Verlag, Düsseldorf (1992). Vorzugsweise enthält die Substratschicht eine Formmasse der Komponente (1), ABS, Polycarbonat, Polybutylenterephthalat, Polyethylenterephthalat, Polyamid oder Blends davon. Sie kann auch aus diesen Polymeren im wesentlichen oder vollständig bestehen. Besonders bevorzugt enthält die Substratschicht (1') eine Formmasse der Komponente (1), ABS, Polycarbonat oder Polybutylenterephthalat, insbesondere eine Formmasse der Komponente (1). Sie kann auch im wesentlichen oder vollständig aus diesen Polymeren bestehen.

Die Schichtdicke beträgt vorzugsweise 100 bis 1000 μm, insbesondere 200 bis 500 μm.

**Schicht (2')**

Schicht (2') ist eine Farbträger- bzw. Zwischenschicht, die aus schlagzähem PMMA, Polycarbonat oder der vorstehend beschriebenen Komponente (1) aufgebaut ist, die kein Polycarbonat enthält, sofern die Substratschicht (1) Polycarbonat enthält. Weisen sowohl Substratschicht als auch Zwischenschicht entweder Polycarbonat auf oder sind polycarbonatfrei, so liegt ein Zweischichtaufbau vor.

Schlagzähes PMMA (High Impact PMMA: HI-PMMA) ist ein Polymethylmethacrylat, das durch geeignete Zusätze schlagzäh ausgerüstet ist. Geeignete schlagzähmodifizierte PMMA sind beispielsweise beschrieben von M. Stickler, T. Rhein in Ullmann's encyclopedia of industrial chemistry Vol. A21, Seiten 473-486, VCH Publishers Weinheim, 1992, und H. Domininghaus, Die Kunststoffe und ihre Eigenschaften, VDI-Verlag Düsseldorf, 1992. Die Zwischenschicht (2) oder die Schicht (2') kann Effektfarbmittel enthalten. Dies sind beispielsweise Farbstoffe, Metallflocken oder Pigmente. Dabei können die Farbstoffe oder Pigmente organische oder anorganische Verbindungen sein.

Die Verbundschichtfolien können auch

(2") eine Zwischenschicht aus Polymethylmethacrylat, schlagzähem Polymethylmethacrylat, ABS, Polycarbonat, Polyethylenterephthalat, Styrol/Acrylnitril-Copolymeren, Polyamid. Polyethersulfon oder Polysulfon, die Effektfarbmittel enthält,

mit einer Schichtdicke von 50 bis 400, vorzugsweise 100 bis 300 μm, aufweisen.

**Schicht (3)**

Schicht (3) der Hinterspritzfolien kann eine Deckschicht aus PMMA sein. Das verwendete PMMA hat vorzugsweise ein Zahlenmittel des Molekulargewichts von 40.000 bis 100.000. Beispiele geeigneter PMMA-Formmassen sind Lucryl ® G88 bzw. G87 der Resart/BASF, sowie die in der EP-A-0 225 500 beschriebenen Massen.

Die Schichtdicke der vorstehenden Hinterspritzfolien beträgt vorzugsweise 100 μm bis 0,5 mm.

Die transparente Deckschicht (3') kann anstelle von Polymethylmethacrylat schlagzähem Polymethylmethacrylat, PVDF, ABS. Polycarbonat, Polyethylenterephthalat oder Styrol/Acrylnitril-Copolymere enthalten. Insbesondere enthält sie Polymethylmethacrylat, schlagzähes Polymethylmethacrylat oder Polycarbonat, speziell Polymethylmethacrylat oder schlagzähes Polymethylmethacrylat, PVDF. Sie kann auch im wesentlichen oder vollständig aus diesen Polymeren bestehen. Die Polymere werden so gewählt, daß sie zu einer transparenten Deckschicht führen.

Eine Haftschicht aus einem Haftvermittler mit einer Schichtdicke von 5 bis 100 μm kann sich an der äußeren Fläche der Substratschicht befinden. Der Haftvermittler dient dazu, eine feste Verbindung mit einem gewählten Substrat herzustellen, das unter der Substratschicht zu liegen kommt (beispielsweise durch Hinterspritzen). Die Haftschicht wird dann verwendet, wenn die Haftung dieses weiteren Substrats an der Substratschicht unzureichend ist (beispielsweise bei Polyolefinsubstraten). Als Haftvermittler wird dabei ein üblicherweise für diese Materialkombination verwendeter Haftvermittler eingesetzt. Beispiele geeigneter Haftvermittler sind:

Ethylen-Vinylacetat-Copolymere zur Kopplung an Polyethylen und Maleinsäureanhydrid-gepfropfte Polypropylene zur Kopplung an Polypropylen. In beiden Fällen wird die Haftung durch das Einbringen polarer Gruppen in die unpolaren Polyolefine erreicht.

Hinterspritzfolien aus einer Substratschicht (1'), gegebenenfalls einer Zwischenschicht (2'), einer Deckschicht (3') und gegebenenfalls einer Haftschicht (0) weisen vorzugsweise die folgenden Schichtdicken auf:

Substratschicht (1') 90 bis 990 μm; Zwischenschicht (2'') 50 bis 400 μm; Deckschicht (3') 10 bis 100 μm; Haftschicht (0) 5 bis 100 μm. Die Gesamtdicke der Verbundschichtfolie beträgt dabei 100 bis 1000 μm, vorzugsweise 200 bis 800 μm.

Die Dreischichtfolie kann beispielsweise aus einer Verbundschichtfolie mit 2 Schichten (2') und (3') hergestellt werden, indem sie mit einer Substratschicht (1') versehen wird. Die Herstellung kann nach dem nachstehend beschriebenen Verfahren erfolgen. Dazu ist es vorteilhaft, daß das Größenverhältnis der MFI-Werte (melt flow index: Schmelzflußindex) der einzelnen Komponenten der Verbundschichtfolien maximal 3:1, besonders bevorzugt maximal 2:1 beträgt. Somit beträgt der größte MFI-Wert einer der Komponenten (0), (1'), (2'), (3') sofern sie in den jeweiligen Verbundschichtfolien vorliegen, maximal das Dreifache, besonders bevorzugt maximal das Zweifache des niedrigsten MFI-Wertes. Hierdurch wird ein gleichmäßiges Fließverhalten aller in den Verbundschichtplatten oder -folien verwendeten Komponenten sichergestellt. Dieses aufeinander abgestimmten Fließverhalten ist insbesondere vorteilhaft bei den nachstehend beschriebenen Herstellungsverfahren.

## Herstellverfahren der Hinterspritzfolien

Die Hinterspritzfolien können durch Adapter- oder Düsencoextrusion der Komponenten hergestellt werden, wobei vorzugsweise der gesamte Verbund in einem einstufigen Prozeß hergestellt wird. Die Düsencoextrusion, insbesondere unter Nutzung der "Membrandüsentechnologie" hat dabei den Vorteil, eine höhere Orientierung der Metallflitter und damit das Erscheinungsbild eines Metalliclackes zu ermöglichen.

Die einzelnen Komponenten werden in Extrudern fließfähig gemacht und über spezielle Vorrichtungen so miteinander in Kontakt gebracht, daß die Verbundschichtplatten oder -folien mit der vorstehend beschriebenen Schichtfolge resultieren. Beispielsweise können die Komponenten durch eine Breitschlitzdüse coextrudiert werden. Dieses Verfahren ist in der EP-A-0 225 500 erläutert.

Zudem können sie nach dem Adaptercoextrusionsverfahren hergestellt werden, wie es im Tagungsband der Fachtagung Extrusionstechnik "Coextrusion von Folien", 8./9. Oktober 1996, VDI-Verlag Düsseldorf, insbesondere Beitrag von Dr. Netze beschrieben ist. Dieses wirtschaftliche Verfahren kommt bei den meisten Coextrusionsanwendungen zum Einsatz.

Weiterhin können die Hinterspritzfolien durch Aufeinanderkaschieren von Folien oder Platten der Komponenten in einem beheizbaren Spalt hergestellt werden. Dabei werden zunächst Folien der einzelnen Komponenten hergestellt. Dies kann nach bekannten Verfahren erfolgen. Sodann wird die gewünschte Schichtfolge durch entsprechendes Übereinanderlegen der Folien hergestellt, worauf diese durch einen beheizbaren Walzenspalt geführt werden und unter Druck- und Wärmeeinwirkung zu einer Verbundschichtplatte oder -folie verbunden werden. Insbesondere beim Adaptercoextrusionsverfahren ist eine Abstimmung der Fließeigenschaften der einzelnen Komponenten vorteilhaft für die Ausbildung gleichmäßiger Schichten.

Die Herstellung von Formteilen, insbesondere Kraftfahrzeugteilen wie Kotflügeln, Türverkleidungen, Stoßstangen, Spoilern und Außenspiegeln, aus den Hinterspritzfolien kann nach bekannten Verfahren erfolgen. Beispielsweise können Verbundschichtplatten mit dem Dreischichtaufbau aus Substratschicht, Zwischenschicht und Deckschicht bzw. dem Zweischichtaufbau aus Substratschicht und Deckschicht durch Thermoformen verarbeitet werden. Dabei können sowohl Positiv- wie auch Negativ-Thermoformverfahren eingesetzt werden. Entsprechende Verfahren sind dem Fachmann bekannt. Die erfindungsgemäßen Verbundschichtplatten werden dabei im Thermoformverfahren verstreckt. Da der Glanzbeziehungsweise die Oberflächenqualität der erfindungsgemäßen Verbundschichtplatten bei hohen Verstreckungsverhältnissen, beispielsweise bis zu 1:5 nicht mit der Verstreckung abnimmt, sind die Thermoformverfahren nahezu keinen für die Praxis relevanten Beschränkungen in bezug auf die mögliche Verstreckung ausgesetzt.

Aus den Hinterspritzfolien können Formkörper hergestellt werden durch Hinterspritzen oder Hintergießen der Verbundschichtfolien mit einem faserverstärkten Kunststoffmaterial, insbesondere mit Komponente (1'), vorzugsweise ABS, PBT, PC/ASA, PC/PBT. PBT/ASA oder auch PP oder PE (bei Verwendung einer Haftschicht), wobei die Hinterspritzfolie vorher thermogeformt werden kann.

Vorzugsweise erfolgt die Herstellung durch Herstellen der Hinterspritzfolie durch Adapter- oder Düsencoextrusion der jeweiligen Komponenten (1') und/oder (2') und/oder (3'), wobei der gesamte Verbund verzugsweise in einem einstufigen Prozeß hergestellt wird, oder durch Aufeinanderkaschieren von Folien der komponenten in einem beheizbaren Spalt,

Thermoformen der Hinterspritzfoliee in einem Formwerkzeug, und

Hinterspritzen oder Hintergießen der Hinterspritzfolie mit dem faserverstärkten Kunststoffmaterial, wobei die Fasern direkt während der Verarbeitung zudosiert werden, so daß ihre Länge im Bauteil zumindest teilweise > 1 mm beträgt.

Das faserverstärkte Kunststoffmaterial enthält Fasern in einer Menge von 5 bis 30 Gew.-%, vorzugsweise 7 bis 25 Gew.-%, insbesondere 10 bis 20 Gew.-%. Die Fasern können dabei Naturfasern wie Flachs, Hanf, Jute, Sisal, Ramie oder Carnaf sein, oder bevorzugt Kohlenstofffasern oder Glasfasern.

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 μm. Es können sowohl Endlosfasern (rovings) als auch Schnittglasfasern (staple) mit einer Länge von 1 bis 15 mm, vorzugsweise 5 bis 10 mm, eingesetzt werden, welche der Verarbeitungsmaschine direkt zudosiert werden.

Die Formteile stammen aus dem Kraftfahrzeugbereich, insbesondere sind sie Kraftfahrzeugkarosserieaußenteile. Sie können dabei kleinere Kraftfahrzeugkarosserieaußenteile, wie Spiegel oder Verblendungen sein, sie können jedoch auch großflächige Karosserieaußenteile sein, beispielsweise Kotflügel, Hauben, Abdeckungen, Türen und so weiter. Es kann sich auch um Stoßstangen beziehungsweise Stoßfänger handeln. Dabei kann insbesondere das Hinterspritzen mit Polyurethan beispielsweise zu Stoßstangen bzw. Stoßfängern führen, die sehr gute Stoßdämpfungseigenschaften aufweisen.

Die Formteile sind allgemein im gesamten Kraftfahrzeugbereich verwendbar.

Die erfindungsgemäßen Formteile weisen, insbesondere gegenüber Formkörpern, in denen eine unverstärkte ABS-Substratschicht verwendet wird, die nachstehenden Vorteile auf:

- geringer Zähigkeitseinfluß durch die harte und spröde der PMMA-Deckschicht bei Verwendung der erfindungsgemäßen Substratschicht (Komponente 1) insbesondere die Verwendung von faserverstärktem Hinterspritzmaterial.

- erhöhte Kratzfestigkeit der PMMA-Schicht, die auch durch die unterhalb der Deckschicht liegende Substratschicht beeinflußt wird.

- effektive Verhinderung der Bildung von Rissen in der PMMA-Deckschicht durch schlagzähe Zwischenschicht und/oder schlagzähe Substratschicht

- es können dünnere PMMA-Deckschichten eingesetzt werden, ohne daß die Substratschicht ihre UV-Beständigkeit einbüßt

- die Formkörper weisen sehr gute Eigenschaften in bezug auf Kälte- zähigkeit, Bruchdehnung, Oberflächenglanz auf

- die Verbundschichtplatten oder -folien können tiefgezogen werden, wobei der Glanz selbst bei hohen Verstreckgraden gleichbleibt (insbesondere im Positivthermoformverfahren)

- kostengünstige Einfärbungen sind durch Einfärben der dünnen Zwischenschicht möglich

- Tiefenwirkung (Flop-Effekt) in der Zwischenschicht, insbesondere aus HI-PMMA oder Polycarbonat ist realisierbar

- kostengünstige Herstellung im Adapter-Coextrusionsverfahren ist insbesondere bei Auswahl von Komponenten mit ähnlichen Fließeigenschaften möglich

- auch hochviskose und kratzfeste PMMA-Typen können zusammen mit hochviskosen anderen Komponenten coextrudiert werden

- Formkörper, die in der Substratschicht Polycarbonate enthalten, sind sehr wärmeformbeständig und besonders schlagzäh

- keine Verwendung von Lösungsmitteln bei der Farbgebung mit den Verbundschichtfolien.

Die Oberfläche der erfindungsgemäßen Formteile wird durch Verwendung von faserverstärkten Produkten nicht beeinträchtigt. Es konnte beispielsweise gezeigt werden, daß auch im sogenannten "LFT-Preßverfahren" hergestellte langglasfaserverstärkte Produkte aus beispielsweise ASA/PC-Blends (Faserlänge im Bauteil etwa 5 mm) eine einwandfreie Oberfläche aufweisen. Auf der nicht folienbeschichteten Seite sind dagegen die Fasern deutlich zu erkennen.

Bei mechanischen Untersuchungen (Kopfaufpralltests) an hinterspritzten Heckklappen, die mit kurzglaserverstärktem PBT/ASA und langfaserverstärktem ASA/PC im Strangablegeverfahren hergestellt wurden, wurde festgestellt, daß das Bruchverhalten der faserverstärkten Werkstoffe durch die Folie stark positiv beeinflußt wird. Die Kombination von glasfaserverstärkten Thermoplasten als Hinterspritzmaterial (Dicke bevorzugt 2 bis 3 mm) mit einer Hinterspritzfolie aus unverstärkten Thermoplasten (Dicke vorzugsweise 0,5 bis 1,5 mm) ermöglicht die Herstellung von Class-A-Bauteilen, die ohne Lackierung hergestellt werden und die ein E-Modul von über 5000 N/mm$^2$, eine thermische Längenausdehnung unter 60 10e-6 1/K und ein in weiten Bereichen splitterfreies Bruchbild zeigen. Das Bruchbild nach Kopfaufpralltest bei -30°C ist sogar günstiger als bei Verwendung eines unverstärkten Thermoplasten.

Die Erfindung wird nachstehend anhand von Beispielen näher erläutert.

Als Hinterspritzfolie kam ein Dreischichtverbund aus HI-PMMA/HI-PMMA gefärbt/ASA/PC gefärbt, 1 mm dick zum Einsatz. Zudem wurden ASA/PC-Blends bzw. PBT/ASA-Blends als Hinterspritzmaterial eingesetzt.

Der ASA/PC-Blend wies folgende Zusammensetzung auf:

60 % PC, 30 % Komponente (1)
10 % Zuschlagstoffe

Der PBT/ASA-Blend wies folgende Zusammensetzung auf:

50 % PBT, 30 % Komponente (1)
15 % Glasfaser (< 1mm),
5 % Zuschlagstoffe

Es wurde Polybutylenterephthalat mit einer Viskositätszahl von 130 eingesetzt.

Als Glasfasern wurden Schnittglasfasern mit einem Durchmesser von 15µm und einer Länge von 12 mm verwendet, die dem ASA/PC direkt beigemischt wurden.

Es wurden sowohl die Bagatellschadensgrenze (kein Schaden erkennbar) sowie das Bruchverhalten bei einer Auftreffgeschwindigkeit von 32 km/h ermittelt. Die Ergebnisse sind in der nachstehenden Tabelle zusammengefaßt.

| Hinterspritzmaterial | Bagatellschadensgrenze [km//h] bei 23°C / -30°C | Bruchverhalten bei 32 km/h und 23°C / -30°C |
|---|---|---|
| ASA/PC, unverstärkt | 24,8 / 13,1 | Weißbruch an Folie/Splitterbruch mit zwei großen Bruchstücken |
| ASA/PC, 15 % langglasfaserverstärkt | jeweils ≥ 32,8 | ? / kein Versagen |
| PBT/ASA, 15 % GF ohne Folie | 5,2 / 2,5 | Riß entlang Griff/Splitterbruch mit drei großen Bruchstücken |
| PBT/ASA, 15 % GF | 13,1 / 10,4 | Riß entlang Griff / kleinere Splitter im Auftreffbereich |

Als Hinterspritzfolie wurde eine dreischichtige Folie eingesetzt. Die Substratschicht mit einer Dicke von 800 µm war aus ASA/PC aufgebaut. Als mittlere Farbschicht kam eine eingefärbte 100 µm dicke Schicht aus schlagzähem PMMA zum Einsatz. Als Deckschicht kam eine 100 µm dicke Schicht aus schlagzähem PPA zum Einsatz. Die Gesamtdicke des hinterspritzten Formteils betrug 3,2 mm.

**Patentansprüche**

1. Hinterspritztes oder hintergossenes Kunststofformteil aus einer Kunststoff-Hinterspritzfolie, die mit einem faserverstärkten Kunststoffmaterial mit einem Fasergehalt von 5 bis 30 Gew.-% hinterspritzt oder hintergossen ist, wobei auch bis zu 50 Gew.-% der Fasern durch mineralische Füllstoffe ersetzt sein können, **dadurch gekennzeichnet, daß** das Hinterspritzmaterial eine Dicke von 1,5 bis 4,5 mm aufweist und die Länge der Fasern im faserverstärkten Kunststoffmaterial im Kunststofformteil zumindest teilweise > 1 mm beträgt.

2. Kunststofformteil nach Anspruch 1, **dadurch gekennzeichnet, daß** die Folie eine Dicke von 0,1 bis 1,0 mm aufweist.

3. Kunststofformteil nach Anspruch 2, **dadurch gekennzeichnet, daß** die Folie eine Dicke von 0,5 bis 1,0 mm aufweist.

4. Kunststofformteil nach einem der Ansprüche 1 bis 3, **dadurch gekennzeichnet, daß** die Hinterspritzfolie eine Verbundschichtfolie ist, die in dieser Reihenfolge umfaßt:

(1') eine Substratschicht,
enthaltend eine ASA-Formmasse aus den Komponenten A und B, und gegebenenfalls C, deren Gesamtmenge 100 Gew.-% ergibt,

a       1 bis 99 Gew.-% eines Pfropfcopolymerisats aus

a1      1 bis 99 Gew.-% einer teilchenförmigen Pfropfgrundlage A1 aus den Monomeren

a11     80 bis 99,99 Gew.-%, mindestens eines $C_{1-18}$-Alkylesters der Acrylsäure als Komponente A11,

a12     0,01 bis 20 Gew.-% mindestens eines polyfunktionellen vernetzenden Monomeren als Komponente A12,

a2      1 bis 99 Gew.-% einer Pfropfauflage A2 aus den Monomeren, bezogen auf A2,

a21     40 bis 100 Gew.-% Einheiten des Styrols, eines substituierten Styrols oder eines (Meth)acrylsäureesters oder deren Gemische als Komponente A21 und

a22     bis 60 Gew.-% Einheiten des Acrylnitrils oder Methacrylnitrils als Komponente A22,

        wobei die Pfropfauflage A2 aus mindestens einer Pfropfhülle besteht und das Propfcopolymerisat eine mittlere Teilchengröße von 50 bis 1000 nm hat,
als Komponente A,

b       1 bis 99 Gew.-% eines Copolymerisats aus

b1      40 bis 100 Gew.-% Einheiten des Styrols, eines substituierten Styrols oder eines (Meth)acrylsäureesters oder deren Gemische als Komponente B1,

b2      bis 60 Gew.-% des Acrylnitrils oder Methacrylnitrils als Komponente B2,

        als Komponente B,

c       0 bis 80 Gew.-% Polycarbonate als Komponente C,
oder eine Substratschicht aus
ABS, Polycarbonat, Polybutylenterephthalat, Polyethylenterephthalat, Polyamid, Polyetherimid, Polyetherketon, Polyphenylensulfid, Polyphenylenether oder Blends davon,

(2') gegebenenfalls eine Zwischenschicht aus Polymethylmethacrylat, schlagzähem Polymethylmetharylat, ABS, Polycarbonat, Polyethylenterephthalat, Styrol/Acrylnitril-Copolymeren, Polyamid, Polyethersulfon oder Polysulfon, die Effektfarbmittel enthalten kann, mit einer Schichtdicke von 50 bis 400 μm,

(3') eine transparente Deckschicht, enthaltend Polymethylmethacrylat, schlagzähes Polymethylmethacrylat, ABS, Polycarbonat, Polyethylenterephthalat, Styrol/Acrylnitril-Copolymere, Polyamid, Polyethersulfon PVDF oder Polysulfon, mit einer Schichtdicke von 10 bis 100 μm.

5. Kunststofformteil nach Anspruch 4, **dadurch gekennzeichnet, daß** die Dicke der Substratschicht (1') 90 bis 990 μm, der Zwischenschicht (2') 50 bis 400 μm und der Deckschicht (3') 10 bis 100 μm beträgt.

6. Kunststofformteil nach Anspruch 4 oder 5, **dadurch gekennzeichnet, daß** die Hinterspritzfolie an der äußeren Fläche der Substratschicht eine Haftschicht mit einer Schichtdicke von 5 bis 100 μm aus einem Haftvermittler aufweist.

7. Kunststofformteil nach einem der Ansprüche 1 bis 6, **dadurch gekennzeichnet, daß** das faserverstärkte Kunststoffmaterial ein Material ist, wie es in Anspruch 4 für die Substratschicht (1') definiert ist.

8. Kunststofformteil nach einem der Ansprüche 1 bis 7, **dadurch gekennzeichnet, daß** die Fasern im Kunststoffmaterial Glasfasern sind.

9. Kunststofformteil nach einem der Ansprüche 1 bis 8, **dadurch gekennzeichnet, daß** die Kunststoffhinterspritzfolie eine Zwischenschicht (2') aus PMMA oder schlagzähem PMMA aufweist, die Effektfarbmittel enthält, und die transparente Deckschicht (3') aus PMMA, PVDF oder schlagzähem PMMA aufgebaut ist.

10. Kunststofformteil nach einem der Ansprüche 1 bis 9, **dadurch gekennzeichnet, daß** das faserverstärkte Kunststoffmaterial ein Blend aus Polycarbonat (PC) oder Polybutylenterephthalat (PBT) mit einer ASA-Formmasse ist, oder eine ABS- oder PBT-Formmasse.

11. Verfahren zur Herstellung von hinterspritzten oder hintergossenen Kunststofformteilen gemäß einem der Ansprüche 1 bis 10 durch
Herstellen der Hinterspritzfolie durch Adapter- oder Düsencoextrusion der jeweiligen Komponenten (1') und/oder (2') und/oder (3'), wobei der gesamte Verbund vorzugsweise in einem einstufigen Prozeß hergestellt wird, oder durch Aufeinanderkaschieren von Folien der Komponenten in einem beheizbaren Spalt,
Thermoformen der Hinterspritzfolie in einem Formwerkzeug, und Hinterspritzen oder Hintergießen der Hinterspritzfolie mit dem faserverstärkten Kunststoffmaterial, wobei die Fasern direkt während der Verarbeitung zudosiert werden, so daß ihre Länge im Bauteil zumindest teilweise > 1 mm beträgt.

12. Verwendung von hinterspritzten oder hintergossenen Kunststofformteilen gemäß einem der Ansprüche 1 bis 10 als oder in Kraftfahrzeugkarosserieaußenteile(n).

**Claims**

1. A plastic molding backmolded by injection molding or casting and comprising a polymer backmolding film backmolded by injection molding or casting with a fiber reinforced plastic having a fiber content of from 5 to 30%, it also being possible for up to 50% by weight of the fibers to have been replaced by mineral fillers, wherein the backmolded material has a thickness of from 1.5 to 4.5 mm and the length of the fibers in the fiber reinforced plastic in the plastic molding is at least partly > 1 mm.

2. A plastic molding as claimed in claim 1, wherein the film has a thickness of from 0.1 to 1.0 mm.

3. A plastic molding as claimed in claim 2, wherein the film has a thickness of from 0.5 to 1.0 mm.

4. A plastic molding as claimed in any of claims 1 to 3, wherein the backmolding film is a composite laminated film comprising, in this order:

   (1') a substrate layer
   comprising an ASA molding composition comprising components A and B, and where appropriate C, whose total amount is 100% by weight,

   a     1 - 99% of a graft copolymer of

   a1     1 - 99% by weight of a particulate graft A1 comprising the following monomers

   a11     80 - 99.99% by weight of at least one $C_{1-18}$ alkyl ester of acrylic acid as component A11,

   a12     0.01 - 20% by weight of at least one polyfunctional crosslinking monomer as component A12,

   a2     1 - 99% by weight of a graft A2 comprising the following monomers, based on A2,

   a21     40 - 100% by weight of units of styrene, a substituted styrene or a (meth)acrylate or mixtures thereof as component A21, and

a22   up to 60% by weight of units of acrylonitrile or methacrylonitrile as component A22,
the graft A2 here consists of at least one graft shell, the graft copolymer having a mean particle size of 50 - 1000 nm,

as component A,

b   1 - 99% by weight of a copolymer of

b1   40 - 100% by weight of units of styrene, a substituted styrene or a (meth)acrylate or mixtures thereof as component B1,

b2   up to 60% by weight of acrylonitrile or methacrylonitrile as component B2,

as component B,

c   0 - 80% by weight of polycarbonate as component C,
or a substrate layer comprising
ABS, polycarbonate, polybutylene terephthalate, polyethylene terephthalate, polyamide, polyetherimide, polyether ketone, polyphenylene sulfide, polyphenylene ether, or blends thereof,

(2') if desired, an interlayer of polymethyl methacrylate, high-impact polymethyl methacrylate, ABS, polycabonate, polyethylene terephthalate, styrene-acrylonitrile copolymers, polyamide, polyether sulfone or polysulfone, which may comprise effect colorants, having a layer thickness of from 50 to 400 μm,

(3') a transparent top layer, comprising polymethyl methacrylate, high-impact polymethyl methacrylate, ABS, polycarbonate, polyethylene terephthalate, styrene-acrylonitrile copolymers, polyamide, polyether sulfone, PVDF or polysulfone, having a layer thickness of from 10 to 100 μm.

5.   A plastic molding as claimed in claim 4, wherein the thickness of the substrate layer (1') is from 90 to 990 μm, the thickness of the interlayer (2') is from 50 to 400 μm, and the thickness of the top layer (3') is from 10 to 100 μm.

6.   A plastic molding as claimed in claim 4 or 5, wherein the backmolded film on the outer surface of the substrate layer has an adhesive layer with a layer thickness of from 5 to 100 μm, comprising an adhesion promoter.

7.   A plastic molding as claimed in any of claims 1 to 6, wherein the fiber reinforced plastic is a material as defined in claim 4 for the substrate layer (1').

8.   A plastic molding as claimed in any of claims 1 to 7, wherein the fibers in the plastic are glass fibers.

9.   A plastic molding as claimed in any of claims 1 to 8, wherein the polymer backmolding film comprises an interlayer (2') of PMMA or high-impact PMMA, which comprises effect colorants, and the transparent top layer (3') is composed of PMMA, PVDF or high-impact PMMA.

10.   A plastic molding as claimed in any of claims 1 to 9, wherein the fiber reinforced plastic is a blend of polycarbonate (PC) or polybutylene terephthalate (PBT) with an ASA molding composition, or is an ABS or PBT molding composition.

11.   A process for producing a plastic molding backmolded by injection molding or casting as claimed in any of claims 1 to 10 by
producing the backmolding film by adapter coextrusion or die coextrusion of the respective components (1') and/ or (2') and/or (3'), the entire composite being produced preferably in a single-stage process, or by successively laminating films of the components in a heatable gap,
thermoforming the backmolding film in a mold, and injection backmolding or casting behind the backmolding film with the fiber reinforced plastic, the fibers being introduced directly during processing, so that their length in the component is at least partly > 1 mm.

12.   The use of a plastic molding backmolded by injection molding or casting as claimed in any of claims 1 to 10 as or in automotive exterior bodywork parts.

**Revendications**

1. Pièce moulée de matière plastique pourvue, sur sa partie arrière, d'un revêtement moulé par injection ou par coulée, composée d'une feuille pour moulage par injection de matière plastique qui est pourvue sur sa partie arrière d'une matière plastique renforcée par des fibres qui présente une teneur en fibres allant de 5% à 30% en poids, qui est moulée par injection ou par coulée, dans laquelle jusqu'à 50% en poids des fibres peuvent être remplacées par des charges minérales, **caractérisée en ce que** la matière de moulage par injection présente une épaisseur allant de 1,5 mm à 4,5 mm, et **en ce que** la longueur des fibres contenues dans la matière plastique renforcée par des fibres de la pièce moulée de matière plastique, est, au moins en partie, supérieure à 1 mm.

2. Pièce moulée de matière plastique selon la revendication 1, **caractérisée en ce que** la feuille présente une épaisseur allant de 0,1 mm à 1,0 mm.

3. Pièce moulée de matière plastique selon la revendication 2, **caractérisée en ce que** la feuille présente une épaisseur allant de 0,5 mm à 1,0 mm.

4. Pièce moulée de matière plastique selon l'une quelconque des revendications 1 à 3, **caractérisée en ce que** la feuille pour moulage par injection de matière plastique est une feuille stratifiée qui comprend, dans l'ordre suivant :

   (1') une couche de substrat
   contenant une matière à mouler ASA composée des composants A et B et, éventuellement, C, dont la quantité totale est de 100% en poids,

   a un copolymère greffé, à raison de 1% à 99% en poids, composé
   a1 d'une base de greffage A1 sous forme de particules, à raison de 1% à 99% en poids, et composée des monomères suivants :

   a11 au moins un ester (alkylique en $C_1$ à $C_{18}$) de l'acide acrylique, à raison de 80% à 99,99% en poids, en tant que composant A11,
   a12 au moins un monomère polyfonctionnel à pouvoir réticulant, à raison de 0,01% à 20% en poids, en tant que composant A12,

   a2 d'une couche de greffage A2, à raison de 1% à 99% en poids, composé, par rapport à A2, des monomères suivants:

   a21 des motifs styrène, styrène substitué ou ester de l'acide (méth)acrylique, ou leurs mélanges, à raison de 40% à 100% en poids, en tant que composant A21, et
   a22 des motifs acrylonitrile ou méthacrylonitrile, à raison de jusqu'à 60%. en poids, en tant que composant A22,

   la couche de greffage A2 étant composée d'au moins une enveloppe de greffage et le copolymère greffé présentant une granulométrie allant de 50 nm à 1 000 nm,

   en tant que composant A,

   b un copolymère, à raison de 1% à 99% en poids, composé

   b1 de motifs styrène, styrène substitué ou ester de l'acide (méth)acrylique, ou leurs mélanges, à raison de 40% à 100% en poids, en tant que composant B1,
   b2 de motifs acrylonitrile ou méthacrylonitrile, à raison de jusqu'à 60% en poids, en tant que composant B2,

   en tant que composant B,
   c des polycarbonates, à raison de 0% à 80% en poids, en tant que composant C,

   ou une couche de substrat composée
   d'ABS, de polycarbonate, de poly(téréphtalate de butylène), de poly(téréphtalate d'éthylène), de polyamide, de polyétherimide, de polyéthercétone, de poly(sulfure de phénylène), de poly(éther de phénylène), ou de leurs mélanges,

(2') éventuellement une couche intermédiaire qui est composée de poly(méthacrylate de méthyle), de poly (méthacrylate de méthyle) résilient, d'ABS, de polycarbonate, de poly(térephtalate d'éthylène), de copolymères styrène/acrylonitrile, de polyamide, de polyéthersufone ou de polysulfone, et qui peut contenir des colorants à effet optique, et qui présente une épaisseur de couche allant de 50 μm à 400 μm,

(3') une couche de recouvrement transparente qui contient du poly(méthacrylate de méthyle), du poly(méthacrylate de méthyle) résilient, de l'ABS, du polycarbonate, du poly(térephtalate d'éthylène), des copolymères styrène/acrylonitrile, du polyamide, de la polyéthersulfone, du PVDF ou de la polysulfone, et qui présente une épaisseur de couche allant de 10 μm à 100 μm.

5. Pièce moulée de matière plastique selon la revendication 4, **caractérisée en ce que** la couche de substrat (1') présente une épaisseur allant de 90 μm à 990 μm, **en ce que** la couche intermédiaire (2') présente une épaisseur allant de 50 μm à 400 μm, et **en ce que** la couche de recouvrement présente une épaisseur allant de 10 μm à 100 μm.

6. Pièce moulée de matière plastique selon la revendication 4 ou 5, **caractérisée en ce que** la feuille pour moulage par injection présente, sur la surface extérieure de la couche de substrat, une couche adhésive qui, présente une épaisseur de couche allant de 5 μm à 100 μm et qui est composée d'un agent adhésif.

7. Pièce moulée de matière plastique selon l'une quelconque des revendications 1 à 6, **caractérisée en ce que** la matière plastique renforcée par des fibres est une matière telle que définie pour la couche de substrat (1') dans la revendication 4.

8. Pièce moulée de matière plastique selon l'une quelconque des revendications 1 à 7, **caractérisée en ce que** les fibres présentes dans la matière plastique sont des fibres de verre.

9. Pièce moulée de matière plastique selon l'une quelconque des revendications 1 à 8, **caractérisée en ce que** la feuille pour moulage par injection de matière plastique comprend une couche intermédiaire (2') qui est composée de poly(méthacrylate de méthyle) PMMA ou de poly(méthacrylate de méthyle) PMMA résilient et qui contient des colorants à effet optique, et **caractérisée en ce que** la couche de recouvrement (3') transparente est composée de PMMA, de PVDF ou de PMMA résilient.

10. Pièce moulée de matière plastique selon l'une quelconque des revendications 1 à 9, **caractérisée en ce que** la matière plastique renforcée par des fibres est un mélange de polycarbonate (PC) ou de poly(térephtalate de butylène) (PBT) et d'une matière à mouler ASA, ou d'une matière à mouler ABS ou PBT.

11. Procédé pour la préparation d'une pièce moulée de matière plastique pourvue sur sa partie arrière d'un revêtement moulé par injection ou par coulée selon l'une quelconque des revendications 1 à 10, au moyen
de la préparation d'une feuille pour moulage par injection, au moyen d'une coextrusion à l'aide d'une buse ou d'une filière, des composants (1') et/ou (2') et/ou (3') en question, dans lequel on prépare de préférence toute la composition dans un procédé en une étape, ou bien au moyen d'un contrecollage, dans une fente que l'on peut chauffer, des feuilles composées des composants, et
d'un thermoformage de la feuille pour moulage par injection dans un outil de formage, puis d'une application sur la partie arrière de la feuille pour moulage par injection d'un revêtement moulé par injection ou par coulée avec la matière plastique renforcée par des fibres, dans lequel l'on ajoute les fibres directement pendant le traitement, de sorte que leur longueur dans l'élément fabriqué est, au moins en partie, supérieure à 1 mm.

12. Mise en oeuvre des pièces moulées en plastique pourvues, sur leur partie arrière, d'un revêtement moulé par injection ou par coulée, selon l'une quelconque des revendications 1 à 10, en tant que pièce extérieure de carrosserie d'un véhicule automobile ou dans une pièce extérieure de carrosserie d'un véhicule automobile.